# EUROPEAN PATENT APPLICATION

(11) **EP 4 380 066 A1**
(43) Date of publication of application: **05.06.2024**
(21) Application number: 22306753.9
(22) Date of filing: 29.11.2022
(51) Int. Cl.: H04B 5/00, G06K 19/07

(54) **INDUCTIVELY TUNED ANTENNA STRUCTURE FOR DIFFERENT WIRELESS CHIPS AND FREQUENCIES**

(71) Applicant: THALES DIS FRANCE SAS, 92190 Meudon (FR)
(72) Inventor: ALLOT, Francis, 13008 MARSEILLE (FR); MERIDIANO, Jean-Luc, 83170 TOURVES (FR); SEBAN, Frédérick, 13390 AURIOL (FR)
(74) Representative: Castelo, Jérôme

(57) **Abstract**

A media card (200 or 300) with an tunable inductive antenna pattern (203) includes an area (204) configured for receiving a wireless chip (306a, 306b, or 306d) operating at one of several given frequencies and an antenna with an antenna pattern printed on a core layer (202) and printed on the area configured for receiving the wireless chip, where the antenna pattern includes one or more selectable conductive extension segments (206a-206g). In some embodiments, the one or more selectable conductive extension segments are selectively removed to tune the antenna for a frequency for the wireless chip operating at one of several given or predetermined frequencies.

## Description

### CROSS-REFERENCE TO RELATED APPLICATIONS

Not applicable.

### TECHNICAL FIELD

The present disclosure generally relates to printed antenna patterns on media cards. More particularly, but not exclusively, the present disclosure relates to an inductively tunable antenna structure enabling a single structure for different wireless chips operating at different frequencies.

### BACKGROUND

Close-proximity communications are used in a variety of applications that promote identification, authentication, payment, tolls, various logistics and the like to establish and manage the "internet-of-things." RFID (Radio Frequency Identification) close-proximity applications include: low frequency (LF) applications that utilize frequencies between 120 and 150 kHz, high frequency (HF) applications, such as smart cards that frequently use frequencies at 13.56 MHz, ultra high frequency (UHF) applications, such as active tags, that use a frequency of 433 MHz, other ultra high frequency (UHF) applications, such as passive toll tags that utilize ISM (Industrial, Scientific and Medical) frequency bands with frequencies from 865 to 928 MHz, microwave frequencies, such as 2.45 to 5.8 GHz, and ultra wideband (UWB) frequencies from 3.1 to 11 GHz. Other close-proximity standards include the WiFi^{®} (IEEE 802.11) bands at 2.4 GHz and 5 GHz and the Bluetooth^{®} band at 2.4 GHz. Emerging standards such as NFC (near-field communication) have also become popular for transferring data from NFC-enabled devices to close-proximity readers using 13.56 MHz as a carrier frequency.

Consumer demand for smaller wireless devices is pushing for smaller compact antennas. As the antenna size is reduced, the bandwidth and number of frequency bands a compact antenna can support becomes more challenging. A number of approaches have been attempted to make antennas tiny and tunable over multiple frequencies. Since mobile devices are typically small in size, keeping antennas sensitive at small apertures is a challenge. Typical miniature antennas include loop and dipole spiral antennas and variations thereof.

U.S. Pat. No. 7,714,794 describes a folded dipole spiral antenna with a loop section for RFID applications.

Approaches to make antennas tunable over multiple frequencies include US patent No. 9246221, which describes a loop antenna formed from portions of a conductive bezel and a ground plane. Prior art references such as these attempt to make the antenna structure tunable using variable capacitors and inductive elements across the antenna feed terminals or across antenna structural components.

Other representative sample prior art references include U.S. patent No. 8164537 that discloses a multiband folded dipole transmission line antenna including a plurality of concentric-like loops, wherein each loop comprises at least one transmission line element, and other antenna elements.

US published application 2010/0231461 discloses a modified monopole antenna electrically connected to multiple discrete antenna loading elements that are variably selectable through a switch to tune the antenna between operative frequency bands.

U.S. Pat. No. 7,576,696 discloses the use of multiple assemblies consisting of arrays of discrete antenna elements to form an antenna system that selectively filters electromagnetic bands.

U.S. Pat. No. 7,394,437 discloses the use of multiple microstrip dipole antennas that resonate at multiple frequencies due to "a microstrip island" inserted within the antenna array.

U.S. Pat. No. 7,432,873 discloses the use of a plurality of printed dipole antenna elements to selectively filter multiple frequency bands.

U.S. Pat. No. 7,173,577 discloses dynamically changing the composition of a fluidic dielectric contained within a substrate cavity to change the permittivity and/or permeability of the fluidic dielectric to selectively alter the frequency response of a phased array antenna on the substrate surface.

U.S. Pat. No. 7,053,844 discloses a multiband dipole antenna element that contains radiator branches.

US Patent No. 7190325 discloses the use of a microprocessor controlled adaptable frequency-selective surface that is responsive to operating characteristics of at least one antenna element, including a dipole antenna element.

U.S. Pat. No. 6,943,730 discloses the use of one or more capacitively loaded antenna elements wherein capacitive coupling between two parallel plates and the parallel plates and a ground plane and inductive coupling generated by loop currents circulating between the parallel plates and the ground plane is adjusted to cause the capacitively loaded antenna element to be resonant at a particular frequency band and multiple capacitively loaded antenna elements are added to make the antenna system receptive to multiple frequency bands.

U.S. Pat. No. 6,717,551 discloses the use of one or more U-shaped antenna elements wherein capacitive coupling within a U-shaped antenna element and inductive coupling between the U-shaped antenna element and a ground plane is adjusted to cause said U-shaped antenna element to be resonant at a particular frequency band and multiple U-shaped elements are added to make the antenna system receptive to multiple frequency bands.

U.S. Pat. No. 5,608,413 discloses an antenna formed using co-located slot and patch radiators to select frequencies and alter the polarization of radiation emissions.

U.S. Pat. No. 4,513,293 discloses an antenna comprising a plurality of parabolic sections in the form of concentric rings or segments that allow the antenna to use mechanical means to select specific frequencies within a range of electromagnetic frequencies.

Typical printed antenna patterns or structures on cards are generally passive and fixed for use on a dedicated frequency matched for use with a wireless chip operating at such frequency.

In this context, an objective of the present embodiments is to overcome at least in part the aforementioned drawbacks, while also being able to lead to other advantages.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a method of manufacturing an tunable inductive antenna pattern on a card includes the steps of providing a core layer, creating an area configured for receiving an antenna module with a wireless chip operating at one of several given frequencies, forming an antenna with an antenna pattern printed on the core layer and the area configured for receiving the antenna module with the wireless chip, where the antenna pattern includes one or more selectable extension segments, and removing the one or more selectable extension segments to tune the antenna for a resonance frequency for the wireless chip operating at the one of several given frequencies.

In some embodiments, the core layer is made of polycarbonate, raw mat polyvinyl chloride, rigid polyvinyl chloride, paper, Teslin, or other materials having similar properties.

In some embodiments, the one or more selectable conductive extension segments are cut (such as drilling, punching, milling, or other techniques) with one or more holes based on an operating frequency of the wireless chip.

In some embodiments, the method further includes a cavity at substantially a center of the area configured for receiving the wireless chip. In some embodiments, the area configured for receiving the wireless chip is a cavity formed by milling on the core layer.

In some embodiments, the method further includes the step of placing the wireless chip on the area configured for receiving the wireless chip.

In some embodiments, a media card with a custom tunable inductive antenna pattern includes a core layer, an area configured for receiving an antenna module with a wireless chip operating at one of several given frequencies, and an antenna with an antenna pattern on the core layer and the area configured for receiving the wireless chip, where the antenna pattern includes one or more selectable extension segments. In some embodiments, the one or more selectable extension segments are selectively removed to inductively tune the antenna for a frequency for the wireless chip operating at the one of several given frequencies. In some embodiments, the core layer is made of polycarbonatem faw mat polyvinyl chloride, rigid polyvinyl chloride, paper, Teslin, or other materials having suitable properties for a core layer. In some embodiments, the card further includes a cavity at substantially a center of the area configured for receiving the wireless chip.

In some embodiments, the one or more selectable conductive extension segments are cut with one or more holes based on an operating frequency of the wireless chip. In some embodiments, the area configured for receiving the wireless chip is a cavity formed by milling.

In some embodiments, a media card with a tunable inductive antenna pattern includes a core layer, an cavity within the core layer configured for receiving an antenna module with a wireless chip operating at one of several given frequencies, and an antenna with the tunable inductive antenna pattern on the core layer and the cavity, where the tunable inductive antenna pattern includes one or more selectable extension segments. In some embodiments, the one or more selectable extension segments are selectively removed to tune the antenna for a predetermined frequency for the wireless chip operating at the one of several predetermined frequencies.

In some embodiments, the card further includes a cavity at substantially a center of the cavity. In some embodiments, the cavity is formed by milling. In some embodiments, the one or more selectable extension segments are selectively removed using a laser.

In some embodiments, the media card further includes the wireless chip operable at the predetermined frequency placed within the cavity after one or more of the selectable extensions segments are selectively removed to inductively match or tune to the frequency of the wireless chip.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1 is an rear plan view of a prior art identity card that includes a conventional antenna designed for a particular wireless chip;
FIG. 2 illustrates a rear plan view of a media card that includes a selectively tunable inductive printed antenna in accordance with the embodiments;
FIG. 3 illustrates a rear plan view of another media card including a selectively tunable inductive printed antenna in accordance with the embodiments; and
FIG. 4 illustrates a flow chart of a method of manufacturing a media card having a selectively tunable inductive printed antenna in accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

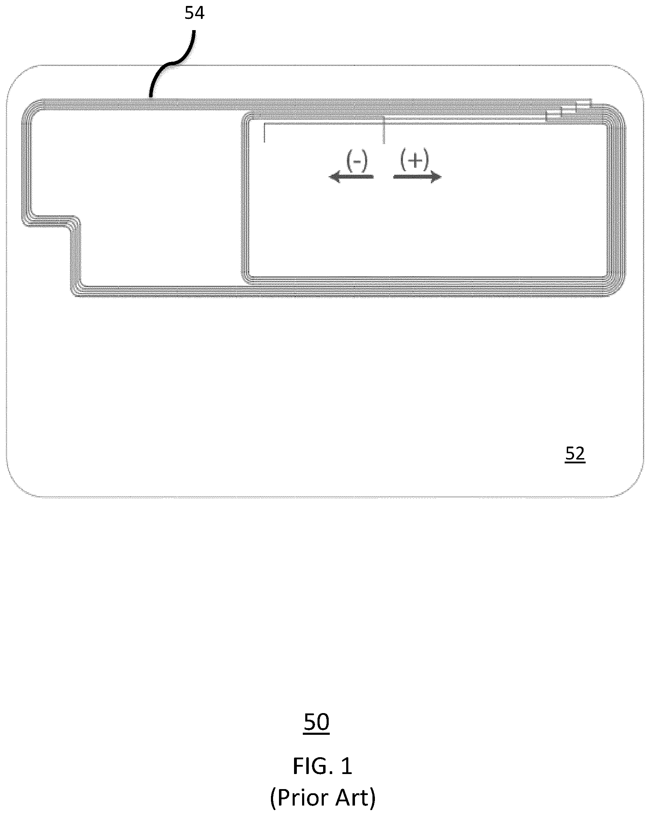

FIG. 1 is an rear plan view of a prior art identity card **50** that allows some level of personalization of the physical appearance of the card post-issuance, e.g., by the customer. Such a card **50** may, for example, have the following elements:
a transparent or opaque polycarbonate (PC) layer **52** having printed antenna pattern **54** printed on the surface of the layer 52; the layer 52 can be formed in a credit card shape by being punched out from a larger sheet or layer of plastic or polycarbonate;
a milled out area (not shown) on or within the layer 52;
a wireless chip (not shown) placed within the milled out area;
one or more embossing areas **(not shown)** where signature panels, holograms or other materials may be embossed onto the layer 52.

With this arrangement, several issues can arise if several wireless chips of various operating frequencies are available as the arrangement of FIG. 1 is configured for only one particular wireless chip or a particular frequency. If a chip of a different frequency is to be used, then a different card with a different printed antenna pattern will be needed. Such arrangement is not friendly or flexible under constrained supply conditions. Such event will have a cost impact and increase the risk of delayed manufacture or overstocking of certain parts.

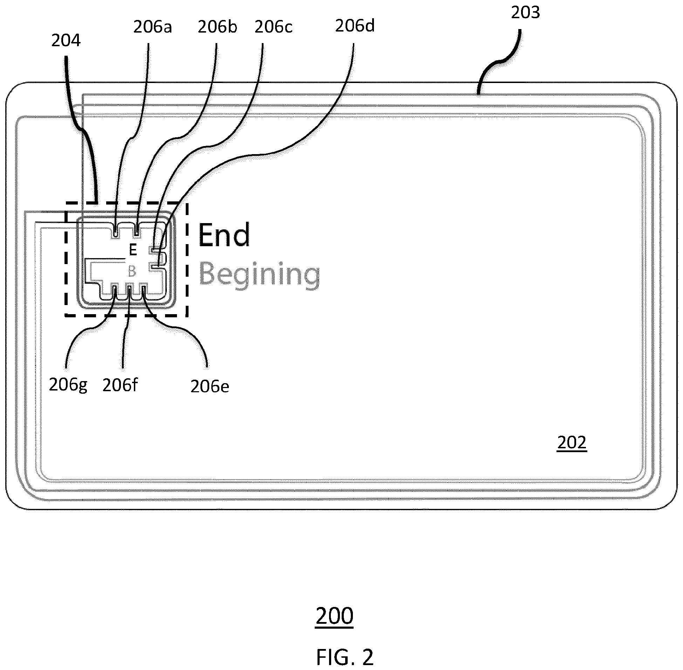

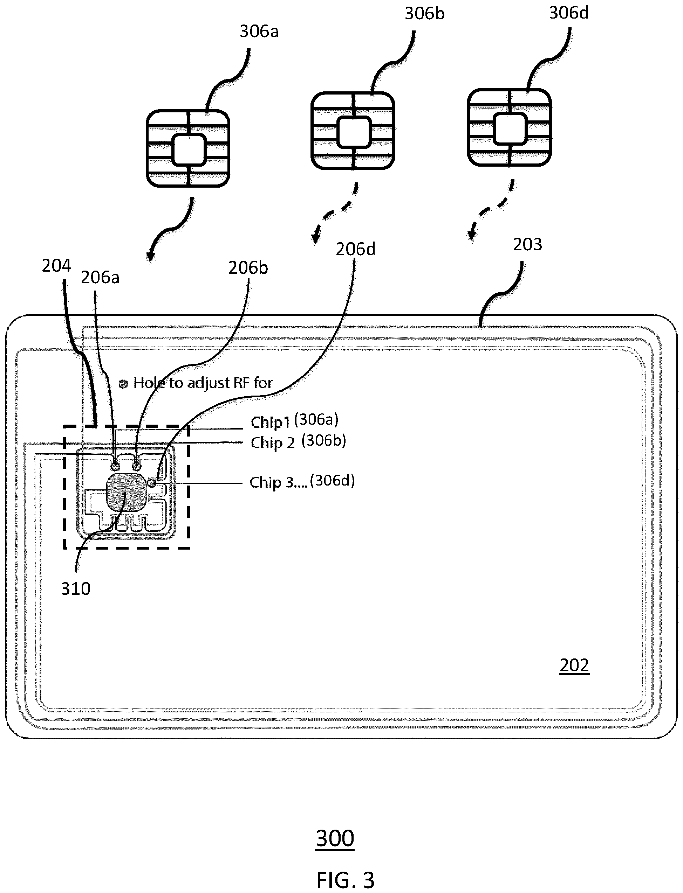

In some embodiments as illustrated in FIGs. 2 and 3, a media card 200 or 300 with a tunable inductive antenna pattern 203 includes a core layer 202, an area 204 configured for receiving an antenna module with a wireless chip (306a, 306b, or 306d) operating at one of several given frequencies, and an antenna with an antenna pattern 203 on the core layer 202 and the area 204 configured for receiving the antenna module with the wireless chip, where the antenna pattern 203 includes one or more selectable extension segments (206a-206g). In some embodiments, the one or more selectable extension segments are selectively removed to inductively tune the antenna for a resonance frequency for the wireless chip operating at the one of several given frequencies. In some embodiments, the core layer 202 is made of polycarbonate, but in other embodiments the core layer can be made of other suitable materials such as raw mat polyvinyl chloride (PVC), rigid PVC, paper or Teslin. In some embodiments, the card further includes a cavity 310 at substantially a center of the area 204 configured for receiving the wireless chip.

In some embodiments, the one or more selectable extension segments are cut (by milling, drilling, punching or with other suitable techniques) with one or more holes based on an operating frequency of the wireless chip. In some embodiments, the area 204 configured for receiving the wireless chip is a cavity formed by milling, drilling, punching, or by any other suitable technique for creating the cavity.

In some embodiments, a media card 200 or 300 with a custom tunable inductive antenna pattern includes a core layer 202, an area (204) within the core layer 202 configured for receiving an antenna module with a wireless chip (306a, 306b, or 306d, etc.) operating at one of several given frequencies, and an antenna with the tunable inductive antenna pattern 203 on the core layer 202 and the cavity 204, where the tunable inductive antenna pattern includes one or more selectable extension segments (206a, 206b, 206d, etc.). In some embodiments, the one or more selectable extension segments are selectively removed to tune the antenna for a predetermined frequency for the wireless chip operating at the one of several predetermined frequencies.

In some embodiments, the card 200 or 300 further includes a cavity 310 at substantially a center of the area 204. In some embodiments, the cavity 310 is formed by milling, drilling, punching or by other suitable techniques. In some embodiments, the one or more selectable extension segments are selectively removed using a laser.

In some embodiments, the media card 200 or 300 further includes the wireless chip (306a, 306b, or 306d) operable at the predetermined frequency placed within the area 204 after one or more of the selectable extensions segments are selectively removed to inductively match or tune to the frequency of the wireless chip.

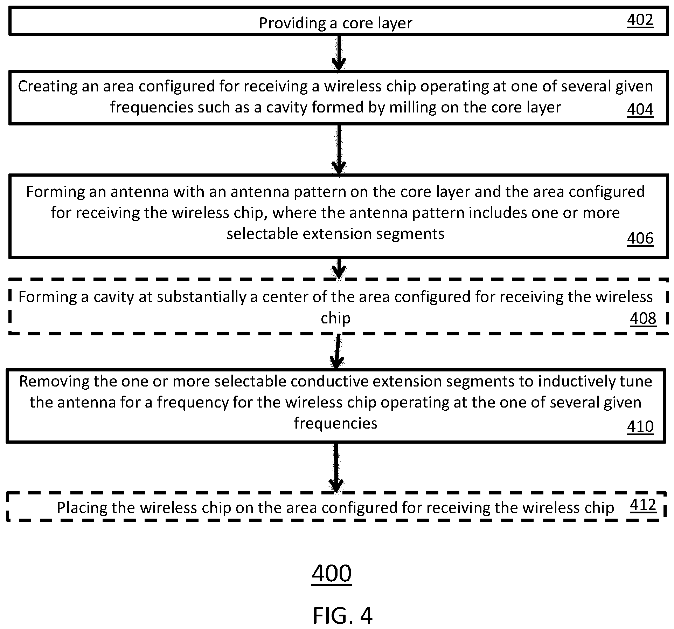

In some embodiments as further illustrated in the flow chart of FIG. 4, a method 400 of manufacturing an tunable inductive antenna pattern on a card includes the steps of providing a core layer at 402 (which can be made of polycarbonate, plastic or other materials), creating at 404 an area configured for receiving a wireless chip operating at one of several given frequencies, forming (at 406) an antenna with an antenna pattern on the core layer and the area configured for receiving the wireless chip, where the antenna pattern includes one or more selectable extension segments, and at 410 removing the one or more selectable extension segments to inductively tune the antenna for a frequency for the wireless chip operating at the one of several given frequencies. Note that the step of forming the antenna with the antenna pattern on the core layer can be done by printing, etching, wire embedding, or by other suitable techniques for forming an antenna on a core layer.

In some embodiments, (in the step of removing) the one or more selectable extension segments are drilled with one or more holes based on an operating frequency of the wireless chip.

In some embodiments, the method 400 further includes the optional step of forming a cavity at substantially a center of the area configured for receiving the wireless chip at 408. In some embodiments, the area configured for receiving the wireless chip is a cavity formed by milling on the core layer.

In some embodiments, the method 400 further includes the step 412 of placing the wireless chip on the area configured for receiving the wireless chip.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A method of manufacturing a tunable inductive antenna pattern on a card (200), comprising:
providing a core layer (202);
creating an area (204) configured for receiving an antenna module with a wireless chip (306a, 306b, or 306d) operating at one of several given frequencies;
forming an antenna with an antenna pattern (203) on the core layer (202) and the area (204) configured for receiving the antenna module with the wireless chip (306a, 306b, or 306d), wherein the antenna pattern (203) includes one or more selectable extension segments (206a-206g); and
removing the one or more selectable extension segments (206a-206g) to tune the antenna for a resonance frequency for the wireless chip (306a, 306b, or 306d) operating at the one of several given frequencies.

2. The method of claim 1, wherein the core layer (202) is made of polycarbonate.

3. The method of claim 1, wherein the one or more selectable conductive extension segments (206a-206g) are cut with one or more holes based on an operating frequency of the wireless chip (306a, 306b, or 306d).

4. The method of claim 1, wherein the method further comprises a cavity (310) at substantially a center of the area (204) configured for receiving the wireless chip (306a, 306b, or 306d).

5. The method of claim 1, wherein the area (204) configured for receiving the wireless chip (306a, 306b, or 306d) is a cavity formed by milling.

6. The method of claim 1, further comprising the step of placing the wireless chip (306a, 306b, or 306d) on the area (204) configured for receiving the wireless chip (306a, 306b, or 306d).

7. A media card (200) with a tunable inductive antenna pattern (203), comprising:
a core layer (202);
an area (204) configured for receiving an antenna module with a wireless chip (306a, 306b, or 306d) operating at one of several given frequencies; and
an antenna with an antenna pattern (203) on the core layer (202) and the area (204) configured for receiving the wireless chip (306a, 306b, or 306d), wherein the antenna pattern (203) includes one or more selectable extension segments (206a-206g);
wherein the one or more selectable extension segments (206a-206g) are selectively removed to tune the antenna for a frequency for the wireless chip (306a, 306b, or 306d) operating at the one of several given frequencies.

8. A media card (200) according to claim 7, wherein the tunable inductive antenna pattern (203) is a custom inductive antenna pattern (203).

9. The card (200) of claim 7, wherein the core layer (202) is made of at least one of polycarbonate, raw mat polyvinyl chloride, rigid polyvinyl chlorid, paper or Teslin.

10. The card (200) of claim 7, wherein the one or more selectable conductive extension segments (206a-206g) are cut with one or more holes based on an operating frequency of the wireless chip (306a, 306b, or 306d).

11. The card (200) of claim 7, wherein the card further comprises a cavity (310) at substantially a center of the area (204) configured for receiving the wireless chip (306a, 306b, or 306d).

12. The card (200) of claim 7, wherein the area (204) configured for receiving the wireless chip (306a, 306b, or 306d) is a cavity formed by milling.

13. A media card (200) according to claim 7, wherein the area (204) configured for receiving an antenna module with a wireless chip (306a, 306b, or 306d) operating at one of several given frequencies comprises a cavity (310) within the core layer (202), wherein the antenna pattern (203) on the core layer (202) and the cavity (310) is a tunable inductive antenna pattern, and
wherein the frequency for which the antenna is tuned by selectively removing one or more selectable extension segments (206a-206g) is a predetermined frequency for the wireless chip (306a, 306b, or 306d) operating at the one of several predetermined frequencies.

14. The media card (200) of claim 13, wherein the one or more selectable conductive extension segments (206a-206g) are selectively removed using a laser.

15. The media card (200) of claim 13, wherein the media card (200) further comprises the antenna module with the wireless chip (306a, 306b, or 306d) operable at the predetermined frequency placed within the cavity (310) after one or more of the selectable extensions segments (206a-206g) are selectively removed to inductively match or tune to the frequency of the wireless chip (306a, 306b, or 306d).
